Europäisches Patentamt

European Patent Office

Office européen des brevets

(11) Publication number: **0 280 510**
**A1**

# (12) EUROPEAN PATENT APPLICATION

(21) Application number: **88301532.3**

(22) Date of filing: **23.02.88**

(51) Int. Cl.⁴: **C 25 D 3/50**
**C 25 D 3/52, C 01 G 55/00**

(30) Priority: **24.02.87 US 18218**

(43) Date of publication of application:
**31.08.88 Bulletin 88/35**

(84) Designated Contracting States:
**AT BE CH DE ES FR GB GR IT LI LU NL SE**

(71) Applicant: **ENGELHARD CORPORATION**
**Menlo Park, CN 40**
**Edison New Jersey 08818 (US)**

(72) Inventor: **Karustis, George A.**
**832 Carleton Road**
**Westfield New Jersey 07090 (US)**

**Wilcox, Jeannine B.**
**230 Oneida Place**
**North Plainfield New Jersey 07060 (US)**

**Balko, Edward N.**
**36 Buttonwood Road**
**Middletown New Jersey 07748 (US)**

(74) Representative: **Fisher, Adrian John et al**
**CARPMAELS & RANSFORD 43 Bloomsbury Square**
**London WC1A 2RA (GB)**

(54) Palladium electroplating bath and process for plating.

(57) An electroplating bath containing a palladium tetramine salt which is used in the high speed plating of palladium is described. A process for the high speed plating of palladium onto components such as electrical connectors and contacts is also disclosed.

EP 0 280 510 A1

Bundesdruckerei Berlin

**Description**

PALLADIUM ELECTROPLATING BATH AND PROCESS FOR PLATING

Background of the Invention

Field of the Invention

The present invention is directed to an electroplating bath for the deposition of palladium onto various surfaces and a process for the high speed plating of palladium onto such surfaces.

Description of the Prior Art

The increase in the price of gold during the past few years has resulted in new methods, equipment and baths in the electroplating field in the attempt to make up for the increases of the price of gold by substituting other metals for gold. Palladium, because of its cost and resistance to corrosion is considered to be a suitable replacement for gold in electrodeposited coatings. There are, however, problems associated with producing films of this metal. Because of its intended use in selective plating machines for electronic applications, the ability to electroplate at high speed is desirable. Not all art baths are capable of plating at high speeds and even the ones that are capable can not plate at high efficiencies. Another problem with prior art baths is the odor that is given off. Some prior art baths operate at high pH's and therefore use a large amounts of ammonia to maintain the pH at a certain minimum level. Since during operation the solution is vigorously agitated, ammonia is given off resulting in a strong and unpleasant ammonia odor. The hydrogen content of most prior art deposits is also a problem. Palladium absorbs hydrogen readily and in large concentrations and can give rise to stressed deposits. This may cause cracks when the hydrogen leaves the deposit. The ductility of the deposit is another problem area. The deposits may be fabricates into another device. This requires the metal deposit to be very ductile and not crack upon moderate bending. The prior art baths generally do not produce sufficiently ductile deposits.

Many palladium solutions have been prepared to minimize or solve one or more of these problems. The prior art emphasizes the use of palladium in the forms of different salts, with complexing agents and at acidic and alkaline pH's. Most acidic solutions use a combination of salts resulting in unstable solutions. Alkaline baths usually operate at pH's of eight to ten in the presence of a complexing agent. No prior art bath takes into account all of the physical properties of the ultimate deposit and the problems associated with producing a suitable deposit. Absent are considerations of plating speed and efficiency. Efficiencies greater than 63% are rare and it is difficult to plate solutions at current densities over 30 ASF in a laboratory. In most of the prior art, the source of palladium metal is not distinguished, thereby implying that it is of no consequence. For example, most of the prior art baths employ a "P" salt (palladium diaminedinitrite).

The present invention overcomes the problems of the prior art by employing a palladium tetramine salt in the presence of a single anion such as sulfate, phosphate, nitrate, sulfamate or citrate. The pure palladium tetramine is used to prepare an electrolyte which electrolyte plating solution contains a minimum amount of ammonia and operates at a pH close to neutral. The deposit resulting from plating with the bath exhibits excellent physical properties and can be produced at high efficiencies of greater than 90%.

Detailed Description of the Invention

According to the present invention, the electroplating bath generally comprises a palladium tetramine salt, and a conducting salt. Other additives may include a brightener, bath additive, a complexing agent and a surfactant.

The palladium tetramine salt is the most important component of the bath. While any suitable anion may be employed with the palladium tetramine cation to achieve electrical neutrality, it is presently preferred to employ a sulfate, phosphate, nitrate, sulfamate, or citrate. Palladium tetramine sulfate is presently most preferred. The palladium is generally present in an amount of about 15 to 30 g/l. The upper limit of 30 g/l could vary slightly depending upon the make-up of the bath, but in no event can it exceed the point of saturation of the bath. It is presently preferred to employ the palladium in an amount of about 25 g/l.

The conducting salt comprises potassium or sodium sulfate, although, any suitable conducting salt such as ammonium sulfate may be employed. The conducting salt acts to increase the conductivity of the solution and, as a results, facilitates more uniform plating especially when plating irregularly shaped surfaces. Generally, the conducting salt concentration does not affect the operation of the bath. It is present in an amount of about 10 g/l to saturation, which depending upon the bath may be as high as about 300 g/l. More preferably, the conducting salt is present in an amount of about 50 g/l to about 200 g/l and most preferably in an amount of about 50 g/l. The concentration of the conducting salt may vary greatly across the disclosed ranges when the bath is in use since the conducting salt is used up and replenished as plating is being performed.

The bath additive can be any suitable material that inhibits or prevents the oxidation of the $Pd^{+2}$ ion to form a solid precipitate at the anode. In use the palladium salt anodic oxidation product may be formed at the anode. Such a material is sparingly soluble in the bath. For example, when the palladium salt is palladium tetramine sulfate, the reaction at the anode is as follows:

$$2(SO_4)^{-2} + Pd(NH_3)_4^{+2} + 2NH_3 \xrightarrow{\text{Anode}} Pd(NH_3)_6(SO_4)_2 \text{ (solid)}$$

A suitable bath additive will prevent the formation of the solid precipitate by reducing it and thus making it soluble in the bath. For example, the palladium $Pd(NH_3)_6(SO_4)_2$ would be reduced to $Pd(NH_3)_3(SO_4)$. Failure to maintain an adequate level of bath additive will result in the formation of the palladium containing precipitate in the bath. This precipitate does not affect the properties deposit. Thus, its removal is not critical, but for appearance sake removal is desirable. In addition, since the precipiate contains Pd, the efficiency of the bath is reduced when the precipitate forms.

Suitable bath additives includes oxalic acid, sodium oxalate, potassium oxalate, sodium sulfate and other oxalate salts. The bath additive is generally present in an amount of about 25 to 50 g/l and more preferably in an amount of about 35 g/l. In order to prevent the formation of the precipitate at the anode, the bath additive should be maintained at a concentration at least that of the bath concentration of the palladium. Potassium oxalate is the presently preferred bath additive since you can add it to the bath in relatively large quantities up to about 75 g/l without affecting the properties of the bath. In use, the bath additive is consumed at a rate of about equal to the rate of the depletion of the palladium metal. Thus, for each gram of palladium plated about I g. of bath additive will be consumed. Maintenance of the amount of bath additive at at least a minimum level can be accomplished by monitoring the concentration of bath additive during use by known analytical methods and replenishing the bath when needed with bath additive.

A brightener may also be added to the bath. While any suitable brightener may be employed, it is presently preferred to use sodium saccharide. Sodium vinyl sulfonate is another suitable brightener. The brightener is provided to impart a smooth texture to the deposit. It is generally present in an amount of about 0l. g/l to about 4.0 g/l and more preferably in an amount of about 0.5 g/l. The brightener concentration is monitored by a simple analytical procedure well known to those skilled in the art and may be maintained at a given level by addition based on analysis. Plating efficiency is not affected by changes in the brightener concentration.

A surfactant may also be added to the electroplating bath of the present invention. Suitable surfactants include sodium laryl sulfate, Fluorad FS-99 which is a fluorocarbon based compound and Triton X-l00 which is an ethoxalated nonyl phenol. The surfactant acts to prevent any bubble marks or pit marks on the deposit. It is generally present in an amount of about l0 ppm to about l00 pm and, more preferably, in an amount of about 25 to 50 ppm.

The electroplating bath of the present invention is prepared by mixing together the various components which will make up the bath including the palladium salt and conducting salt in water preferably dionized water and, if necessary, the pH of the bath is adjusted to the desired level. Generally, the pH of the bath ranges from about 6 to 9.5. It is presently preferred to prepare the bath so that the pH is about 8 to 8.5. If after mixing the ingredients, the bath is not at the desired pH level it can be adjusted by adding a suitable base such as ammonium hydroxide, potassium hydroxide or sodium hydroxide, it being presently preferred to employ either sodium or potassium hydroxide because of the objectional odors caused by ammonium hydroxide.

The palladium plating bath of the present invention is utilized by immersing the work piece to be plated within the bath, together with a plating anode and applying an electrical potential across the work piece and the anode to provide a desired level of current density at the surfaces of the work piece. Any suitable work piece may be electroplated with palladium. The surface of the work piece must be electrically conductive and the work piece may be prepared by known techniques to provide the surface on which the palladium electrodeposit will adhere in the desired thickness which is typically about 5 to 40 microinches.

An operating temperature of from about 25°C to about 65°C will provide suitable results. It is, however, presently preferred to operate the bath at about 50°C. Temperatures greater than 50°C are unnecessary, while temperatures below about 22°C may affect the appearance of the deposit. The bath temperature does not, however, substantially affect the plating efficiency.

A wide range of current densities at the workpiece surface may be employed and, generally, the higher the current density, the higher is the rate of the deposition of palladium. The bath of the present invention is capable of high deposition rates at high current densities. Efficiencies of 85% at l80 ASF have been observed; the plating rate being I microinch/second at 60 ASF. Maximum current densities that may be employed are equipment dependent. Deposition at current densities higher than l80 ASF is feasible if excellent solution agitation is available. The bath of the present invention is capable of high deposition rates, even in pearly agitated solutions. The upper limit of the plating efficiency and the practical, attainable current density is a function of the individual piece of plating equipment in the use. The effects of current density are illustrated in Example 9.

As discussed above, the preferred pH of the bath is about 8 to 8.5, although the electrolyte will deposit palladium at a pH in the range of about 6 to 9.5. The pH of the solution generally declines as the solution is used. Thus, if a particular pH is preferred, the pH may be raised by adding a suitable base such as l0% reagent grade sodium hydroxide or potassium hydroxide. While ammonium hydroxide may also be used, it is not necessary and not desirable since it will create odors of ammonia.

At a pH of less than about 7, the deposit may not be visually acceptable. However, the physical characteristics of the deposit are not effected. If visual appearance is a criterion, the solution may be adjusted to the desired pH range. The efficiency of the bath is generally not dependent upon the pH of the bath itself.

The bath of the present invention is not sensitive to lead, copper, nickel, or iron contamination within the limits tested. Copper has been evaluated as 2, 4, 8, l6, 32, 64 and l00 ppm. At these concentrations, no deleterious effects were noted in deposit appearance, but at higher concentrations a small decrease in efficiency was observed. At the l6 ppm. copper, the solution was green. However, no visual change was seen in the deposit itself. It is theorized that this is due to the high current densities at which the bath plates. At low current densities, some pink color may be seen at concentrations above 5 ppm. copper. Copper may be removed from the solution, if desired, by circulating the solution through a suitable sorption bed or other suitable filtering device, or by dummying at low current density.

Lead was evaluated as a contaminant at 5, 10, 20 and 40 ppm. No effect on the deposit or solution properties was noted. If desired, lead may be removed from the solution by circulating the solution through a lead removal cartridge such as one manufactured by Engelhard.

Nickel has also been investigated as a contaminant at concentrations as high as 160 ppm without noting any harmful effects on the deposit or solution properties. About 80 ppm, the deposit was no longer uniform but had an irregular appearance.

Iron has been evaluated as a contaminant at concentrations up to 160 ppm. Again, no harmful effects were noted. At the high operating pH of the palladium solution, iron very rapidly precipitates as iron oxide.

The plating efficiency of the solution is not dependent on the density of the solution. As the solution is used and the metal replenished, the solution density increases. Specific gravities as high as 33° Baume' have observed without there being any effect on solution operation or deposit properties. When prepared, it is generally desired to prepare the bath to have a specific gravity of about 8° to 11° Baume'.

While not required, continuous filtration is recommended, for example, using a 5 micron polypropylene filter. While any suitable anodes may be used to carry out the plating process, the suggested anode is a platinized titanium anode having an area ratio of about 2 to 1 with respect to the cathode. The important plating perimeters are however, independent of anode ratio.

The invention will be more fully understood by reference to the following illustrative examples:

## EXAMPLE 1

Prior Art Bath

To about 600 ml distilled water was added 32.7 g palladium "P" salt (Palladium diamine dinitrite 0.14 M, 15 g Pd), 100 g ammonium sulfamate, 125 ml ammonium hydroxide, diluted to 1 liter and heated to 30°C, pH = 8.

Copper panels (3"x1") were cathodically cleaned, unused and plated for 2 minutes at 30 ASF. The surface was bright and the plating efficiency was 55%. The electrolyte had a distinct odor of ammonia.

Elongation "dogbone" strips of copper were plated as above and evaluated for elongation in the usual manner. The results were:

| % Elongation | Result |
|---|---|
| 2 | no cracks, micro modules |
| 3 | cracks, parallel and regular |
| 4 | cracks, parallel and regular |

Copper panels (3"x1") were plated, as described above, to thicknesses of 40 and 80 microinches and were exposed to a combination of $H_2O/SO_2$ for 24 hours in the Leeds and Clark test. Neither thickness of palladium showed the spots that are characteristic of pores.

The contact resistance of the palladium was measured at 25 points over a 0.25 x 0.25 cm grid at 100 g and 20 g probe weight.

| Contact Resistance * | | |
|---|---|---|
| | 100 g. | 20 g. |
| Maximum | 11.1 | 9.70 |
| Minimum | 1.04 | 2.35 |
| Mean | 3.33 | 4.47 |
| Standard Deviation | 2.14 | 1.87 |

*all results are in milliohms

The hydrogen content of the palladium was determined to be:

4

| H/Pd | Normal ml $H_2$/g. Pd |
|------|----------------------|
| 0.0355 | 1.627 |
| 0.033 | 3.465 |

The stress was measured using an IS Meter and the procedure of Davorak and Vrobel and was 16.17 kg/m² (The strip was plated at 15 ASF).

The solderability was evaluated using a force balance and was determined to be "good".

## EXAMPLE 2

### Preparation of Palladium Tetramine Sulfate Procedure A - Nitrate Liquors

To a 5 liter round bottom flask equipped with dropping funnel, thermometer, reflux condenser and heating mantle were added 286 g palladium (2.688M), 57.2 g potassium nitrate and, slowly, a solution of 1531 g 68% nitric acid and 2.2 g hydrochloric acid was added.

The first half of the solution was added slowly because of the evolution of red $NO_2$ fumes and the vigor of the reaction. The second half was added rapidly and heat was applied. The reaction was heated overnight at 95°C. In the morning, the reaction mixture, 750 ml, weighing 1134 g was transferred to a beaker and heated to boiling. As the reduction in volume permitted, 445 ml sulfuric acid (818.8 g, 8.35 m) was added. Heating was continued until the temperature of the mixture reached 180°C. The solution was cooled, filtered through sintered glass and the solid was reacted with 775 ml ammonium hydroxide. The final solution was carbon treated and filtered giving a clear, yellow filtrate characterized as follows: 840 ml, pH 7, and 111 g/l Pd (palladium tetramine sulfate).

### Procedure B - Sulfuric Acid Dissolution

To a 250 ml round bottom flask equipped with reflux condenser and heating mantle was added 53.2 g palladium (0.5 m), 160 ml sulfuric acid (294.4 g, 3.00 M) and 5 ml water. The solution was heated at 280°C for seven (7) hours; during this time there was vigorous evolution of $SO_2$. After cooling and decanting the liquid, the solid was dissolved in a little water and 200 ml ammonium hydroxide was added.

After carbon treatment and filtration, 500 ml of a clear yellow liquid was obtained characterized as follows: 66 g/l Pd (62% yield), pH 9.8, and Be 16.0 (palladium tetramine sulfate).

## EXAMPLE 3

### Preparation of Bath

To one (1) liter of distilled water was added:
Pd 25 g/l as 96.6%, Pd $(NH_3)_4$ $SO_4$ salts (weighed 65.81 grams)
$SO_4$ 22.41 grams contained in Pd$(NH_3)_4$ $SO_4$ salts as
$SO_4$ 27.05 grams contained in $NA_2SO_4$ (40 grams at 67.63% $SO_4$)
0.50 grams sodium saccharine.

Deposits were made on copper at a current density of 60 ASF and a plating rate of 1 microinch/second. The bath had a pH of 8.5 and was run at a temperature of 50°C. The porosity of the three (3) plated samples was tested by exposure to $SO_2$ for twenty-four (24) hours. The results were as follows: (1) Sample 1 had 4 spots on one side of the deposit and no spots on the other side; (2) Sample 2 had no spots on either side of the deposit; and (3) Sample 3 has 3-4 spots on one side of the deposit and 12-15 clustered in the low current density area of the other side.

## EXAMPLE 4

To 1 liter of distilled water was added:
Pd - 25 g/l as 94% pure, Pd $(NH_3)_4SO_4$ salts (67.56 g)
$SO_4$ 24.3 g/l contained in Pd $(NH_3)_4SO_4$ salts
$SO_4$ 22.7 g/l as sodium sulfate (33.9 g)
$SO_4$ 3.0 g/l as ammonium sulfate (4.2 g)
0.5 g/l sodium saccharine.

The bath had a pH of 7.8 and a temperature of 50°C. Copper substrates were plated at a current density of 60 ASF.

## EXAMPLE 5

To one (1) liter of distilled water was added:
Pd 25 g/l as 94% Pd$(NH_3)_4SO_4$ crystals (67.57 g)
$SO_4$ 24.3 g/l contained in Pd$(NH_3)_4SO_4$ crystals as weighed
$SO_4$ 3.0 g/l as ammonium sulfate (4.2 g)
$SO_4$ 22.7 g/l as potassium sulfate (44.18 g at 55.12% $SO_4$)
0.5 g/l sodium saccharine

The pH of the bath was 7.3 and it was run at a temperature of 50°C. Copper substrates were plated at a current density of 60 ASF and at a rate of I microinch/second.

EXAMPLE 6

To one (I) liter of distilled water was added:
Pd 25g/l as Pd (NH$_3$)$_4$SO$_4$ (63.53 g)
SO$_4$ 22.56 g/l contained in the 63.53 g of Pd (NH$_3$)$_4$SO$_4$
SO$_4$ 3.00 g/l as ammonium sulfate (4.2 g)
SO$_4$ 24.44 g/l as potassium sulfate (44.34 g)
0.5 g/l sodium saccharine
2.0 g/l sodium sulfite was added as a bath additive for each I/2 turnover.

The pH of the bath was 8.I and has a temperature of 50°C. Copper substrates were plated at a current density of 60 ASF.

The plated substrates were tested at the 3rd turnover and the results were as follows:

(I) Plating rate = I + microinches/second at 60 ASF

(2) Ductility = 4% ε*; 6%ε; and 8%ε; All good, no cracks

(3) Porosity (24 hr SO$_2$ Exposure)

Sample I - 47 microinch deposit-I0 spots except for cluster in high current density area of one side and 25 spots except for clusters in high current density area of the other side.

Sample 2 - 96 microinch deposit - 70 spots scattered on one side and I50 spots on the other side.

(4) Contact Resistance

Sample I 48 microinch deposit - mean resistance 2.76 milliohms

Standard Deviation I.37 milliohms

Sample 2 83 microinch deposit - mean resistance 3.42 milliohms

Standard Deviation I.70 milliohms

*ε% = % Elongation

EXAMPLE 7

The bath of this example is the same as the bath of Example 6, except that potassium oxalate was used as the bath additive rather than sodium sulfite. The pH of the bath was 7.8 and the bath was run at a temperature which varied from 50° to 58°C. The bath was run at a current density of 60 ASF. Copper substrates which were plated were tested at the third and fifth turnovers and the following results were obtained:

| | 3rd Turnover | 5th Turnover |
|---|---|---|
| (1) Plating rate: | 1 microinch/second | 1 + microinch/second |
| (2) Ductility: | 4%ε ; Good, no cracks<br>6%ε ; Good, no cracks<br>8%ε ; Start of some cracks | 4%ε ; Good, no cracks<br>6%ε ; Good, no cracks<br>8%ε ; Some cracks |
| (3) Porosity:<br>Sample 1 | 40 microinch deposit-<br><10 spots either side<br>after 44 hr. SO$_2$ exposure | |
| Sample 2 | 80 microinch deposit-6<br>spots on one side, 25 spots<br>on the other side after<br>44 hr. SO$_2$ exposure | |
| (4) Contact Resistance: | 40 microinch deposit-<br>Mean Resistance 2.34<br>Milliohms<br>Standard Deviation<br>1.57 Milliohms | 40 microinch deposit<br>Mean Resistance 3.50<br>Milliohms<br>Standard Deviation<br>1.70 Milliohms |

EXAMPLE 8

A four (4) liter bath was made up by adding the following to distilled water: 254.44 g. palladium tetramine sulfate, 200 g. potassium sulfate, 16 g. ammonium sulfate, and 200 g. potassium oxalate. Copper lead frames that had been given a nickel strike were plated at a current density of 60 ASF. Good plating was achieved.

EXAMPLE 9

High Speed Electroplating Test

With the same bath as that described in Example 7 Robbins-Craig Tests were run. The Robbins and Craig plating module is a laboratory version of a production model strip plater. It has the ability to circulate a solution, plate a continuous strip of substrate, and operate at current densities that are limited only by the equipment. Six inch static strips were plated, and the remaining features of the machine were utilized.

The object of the experiment was to determine the influence of current density, pH, temperature, and brightener concentration on the plating and deposit characteristics. Machine parameters, such as the effect of circulation rate on the efficiency, were also investigated.

The efficiency of deposition, appearance of the deposit, and plating voltage were examined at different conditions. Deposits were prepared at temperatures of 25°C to 65°C at 10°C intervals (excluding 35°C). At each temperature panels were plated at four pH values (6, 7, 8 and 9) and at each of these conditions four current densities were examined (29, 58, 115, and 174 asf). The results are summarized below.

## TABLE 1

| Palladium Concentration g/l | Efficiency % | Rate microinches/second |
|---|---|---|
| 25.0 | 92 | 1.06 |
| 22.3 | 91 | 1.06 |
| 17.3 | 90 | 1.05 |
| 15.9 | 85 | 0.98 |
| 12.4 | 90 | 1.05 |
| 8.0 | 74 | 0.86 |
| 7.2 | 54 | 0.68 |

## TABLE 2

Deposit Appearance of Palladium in Robbins-Craig Tests

12 liters/minute flow rate - no saccharin

| pH | 29 asf | 58 asf | 115 asf | 174 asf |
|----|--------|--------|---------|---------|
| Temperature = 65°C | | | | |
| 9 | B, M | B | Brown | Brown, |
| 8 | SB, IRR | M | B | B, SB |
| 7 | M | M | SB | B, SF |
| 6 | B | B | SB, Coarse | SB |
| Temperature = 55°C | | | | |
| 9 | B, M | B, M | B, M | |
| 8 | B, C | B | B, IRR | B, IRR |
| 7 | N | N | Matte | N |
| 6 | B | M, Matte | M, Matte | M, Matte |
| Temperature = 45°C | | | | |
| 9 | B, IRR | B, IRR | C | M |
| 8 | B, IRR | C | IRR | -- |
| 7 | SB, M | M | M, IRR | M |
| 6 | SB | SB, M | B | B, M |
| Temperature = 25°C | | | | |
| 9 | C | C | Matte | R |
| 8 | C | C | C | C |
| 7 | B, Matte | Dull | IRR | C |
| 6 | SB | SB | IRR | C |

Legend: B - Bright          SB - Sandy Beach
        M - Micron Nodules  C - Cracks
        IRR - Irregular Surface  N - Nodules

## TABLE 3

Deposit Appearance of Palladium in Robbins-Craig Tests

12 liters/minute flow rate - 0.5 g/l saccharin added

| pH | 29 asf | 58 asf | 114 asf | 174 asf |
|----|--------|--------|---------|---------|
| Temperature = 65°C | | | | |
| 9 | M | M | M | M |
| 8 | M | M | M | M |
| 7 | M | M | M | M |
| 6 | M | M | A | A |
| Temperature = 55°C | | | | |
| 9 | M | A | A | A |
| 8 | M | M | A | A |
| 7 | M | M | A | M |
| 6 | M | M | A | M |
| Temperature = 45°C | | | | |
| 9 | M | M | M | M |
| 8 | M | M | M | M |
| 7 | M | A | M | M |
| 6 | A | A | M | M |

Legend:  A = Perfect Deposit

M = Acceptable Deposit

## TABLE 4

Deposit Appearance of Palladium in Robbins-Craig Tests

24 liters/minute flow rates – 0.5 g/l saccharin

| pH | 29 asf | 58 asf | 114 asf | 174 asf |
|----|--------|--------|---------|---------|
| **Temperature = 65°C** | | | | |
| 9 | A | A | A | A |
| 8 | A | A | A | A |
| 7 | M | M | M | M |
| 6 | M | M | M | M |
| **Temperature = 55°C** | | | | |
| 9 | A | A | A | A |
| 8 | A | M | M | M |
| 7 | M | M | M | M |
| 6 | M | M | M | M |
| **Temperature = 45°C** | | | | |
| 9 | M | M | M | M |
| 8 | A | M | M | M |
| 7 | A | A | A | M |
| 6 | M | M | A | M |

Legend: A = Perfect Deposit

M = Acceptable Deposit

EXAMPLE 10

This example demonstrates the bath's capability of being used in electroforming applications. A copper substrate plated with a palladium plating bath as described in Example 7. The deposit resulted from plating at a current density of 60 ASF for three (3) hours. A four to five gram deposit was separated from each side of the substrate to form two ductile sheets of pure palladium. The sheets were 8.13 mils thick. This evidenced the suitability of the bath in electroforming applications.

EXAMPLE 11

All deposits were made on 1"x3" Hull Cell Brass that had been given (a) an 80 microinch nickel strike with nickel sulfamate electrolyte, followed by (b) a 40 microinch deposit of palladium using the high speed $Pd(NH_3)_4SO_4$ electrolyte of Example 7. The gold coatings listed below designate the kind of gold and thickness of the deposit. (E75 is acid hard gold and E56 is pure gold. Duplicate deposits were made and tested three times:

(1) New
(2) After 100 hrs. at 85°C/85% humidity
(3) After additional 300 hrs. at 85°C/85% humidity
(All contact resistance results are in milliohms)

| Sample Type | Dep #1 | 1. New $\bar{x}$ | SD | 2 100 hours $\bar{x}$ | SD | 3 300 hours $\bar{x}$ | SD |
|---|---|---|---|---|---|---|---|
| Palladium/Nickel | 1 | 3.36 | 1.30 | 2.78 | 1.63 | 3.70 | 1.57 |
| | 2 | 3.34 | 1.26 | 3.11 | 1.20 | 5.85 | 1.f |
| E56-5 microinch/Pd | 1 | 2.11 | 0.46 | 4.46 | 0.87 | 3.09 | ˀ ⅄2 |
| | 2 | 2.49 | 1.62 | 4.33 | 1.92 | 8.78 | ⁚ ..38 |
| E56-10 microinch/Pd | 1 | 2.13 | 0.37 | 3.30 | 2.87 | 4.19 | 1.82 |
| | 2 | 2.35 | 1.30 | 2.97 | 1.20 | 3.5] | 1.29 |
| E75-5 microinch/Pd | 1 | 3.05 | 2.25 | 3.35 | 1.89 | 3. ⅃9 | 1.12 |
| | 2 | 3.06 | 1.51 | 3.96 | 1.28 | ˥.27 | 1.72 |
| E75-10 microinch/Pd | 1 | 3.81 | 1.52 | 1.91 | 0.40 | 3.89 | 1.16 |
| | 2 | 3.75 | 1.70 | 3.41 | 1.90 | 3.70 | 1.37 |

EXAMPLE I2

A one (I) liter bath was made up by adding the following components to distilled water:
Pd 25 g/l as $Pd(NH_3)_4SO_4$ liquid concentrated as 63 g/l Pd = 396.8 cc
$SO_4$ 28.25 g/l contained in $Pd(NH_3)_4SO_4$ liquid concentrate as 63 g/l Pd = 396.8 cc
$SO_4$ 36.3 g/l ammonium sulfate (50 g.)
The bath was run at a pH of 8.5, a temperature of 50°C and a current density of 60 ASF. Copper substrates were plated and at 2.55 turnovers the following results were observed:

(1) Plating rate = 1 microinch/second

(2) Ductility = 6%Ɛ; Good, 8%Ɛ; Trace of cracks

(3) Porosity = 38 microinch deposit, no spots either side.
(24 hr. $SO_2$ Exposure

76 microinch deposit, 3 spots on one side, 5 or 6 in the low current density area of other side.

(4) Contact Resistance 3 milliohms

At 4.7 turnovers 0.5 g. sodium saccharine was added. A deposit was then made at a current density of 60 ASF for I20 min. to conduct a hardness test. The result of the hardness test was I99 Knoop.

EXAMPLE I3

A one (I) liter bath was made up by adding to distilled water Pd 25 g/l as 3I6.45 cc of liquid concentrate containing $SO_4$ 67 g/l. The bath was run at a pH of 8.5 and a temperature of 50°C. Copper substrates were plated and the following results were observed:

Substrate Copper

(1) Plating rate      =      1.06 microinch/second at 60 ASF

(2) Ductility         =      4%$\epsilon$; 6%$\epsilon$; 8%$\epsilon$; all Good and no cracks

(3) Porosity          =      38 microinch one side of deposit pore
    (24 hr. $SO_2$ Exposure) free, and the other side numerous
                             pores.

                             83 microinch had no pores on either
                             side.


EXAMPLE I4
     The bath is the same as that of Example I3 except that 0.5 g/l of sodium saccharine was added. The bath was run for 2.4 turnovers. The following results were observed at the first and second turnovers.

First Turnover

(1) Plating rate      =      0.9 microinch/second at 1st turnover

(2) Ductility         =      4%$\epsilon$;Good, and no cracks at 1st turnover
                             6%$\epsilon$;Good, and no cracks at 1st turnover
                             8%$\epsilon$;Good, and no cracks at 1st turnover

(3) Porosity          =      36.5 microinch deposit had 9 spots on
    (24 hr. $SO_2$ Exposure  one side and 30 to 40 on the other side

                             70.0 microinch deposit had 10 spots on
                             one side and 10 spots at the low current
                             density area of the other side

Second Turnover

(1) Plating rate    =    Same as 1st turnover

(2) Ductility       =    Same as 1st turnover

(3) Porosity        =    38 microinch had more than 100 spots
                         on either side.

                         65 microinch had about 75 spots on one
                         side and 30 to 40 localized in the lo<
                         current density of the other side.

(4) Contact Resistance:

|  | Before Porosity Test | After Porosity Test |
|---|---|---|
| Mean Resistance: | 3.256 milliohms | 5.626 milliohms |
| Standard Deviation: | 1.658 milliohms | 2.270 milliohms |

Hydrogen to Pd ratio:    .008/.014

The electrolyte was agitated as follows:
Cathode rod - 55 to 60 strokes per minute with 5 inches to each full stroke.

The Examples including the results described therein demonstrate that the palladium electroplating bath of the present invention performs excellently as a high speed printing bath. It produces deposits which are ductile, possess excellent corrosion resistance without releasing any objectionable ammonia odor. The bath also operates at high efficiencies in excess of 80% even at high current densities of 60 ASF and greater.

**Claims**

1. A stable, aqueous palladium electroplating bath suitable for plating palladium at high speeds comprising palladium in the form of a palladium tetramine salt.

2. The palladium electroplating bath of Claim 1, wherein said palladium tetramine salt is selected from the group consisting of palladium tetramine sulfate, palladium tetramine nitrate, palladium tetramine phosphate, palladium tetramine citrate, and palladium tetramine sulfamate.

3. The palladium electroplating bath of claim 2, wherein the palladium tetramine salt is present in an amount of about 15 to 30 g/l, the amounts representing the amount of palladium in solution.

4. The palladium electroplating bath of claim 1, wherein the bath additionally contains a conducting salt.

5. The palladium electroplating bath of claim 4, wherein the bath contains a bath additive for substantially preventing the oxidation of the Pd$^{+2}$ ion to form a solid precipitate at an anode of the electroplate bath.

6. The palladium electroplating bath of claim 5, wherein the bath additive is selected from the group consisting of oxalic acid, sodium oxalate, potassium oxalate, and sodium sulfate.

7. The palladium electroplating bath of Claim 4, wherein the bath additionally contains a brightener.

8. The palladium electroplating bath of Claim 7, wherein the brightener is sodium saccharide.

9. A liquid concentrate for use in producing a stable, aqueous palladium electroplating bath comprising a palladium tetramine salt in liquid concentrate form.

10. A palladium replenisher salt for use in replenishing a palladium electroplating bath comprising a palladium tetramine salt.

11. A stable, aqueous palladium electroplating bath suitable for plating palladium at high speeds comprising palladium in the form of palladium tetramine sulfate, potassium sulfate, ammonium sulfate, potassium oxalate and sodium saccharide.

12. The palladium electroplating bath of claim 1, wherein the bath has a pH of about 6 to 9.5.

13. A method of depositing palladium on a substrate comprising passing an electric current through the electroplating bath comprising a palladium tetramine salt between a cathode and an anode for a period of time sufficient to produce a palladium electro-deposit on the substrate.

14. The method of claim 13, wherein the deposit is plated substantially without emitting an odour of ammonia.

15. The method of claim 13, wherein the current density is about 60 to 180 ASF.

16. The method of claim 13, wherein the bath plates at an efficiency of at least about 80% at a current of at least about 60 ASF and a plating rate of at least about 1 microinch per second.

17. A substrate plated with palladium having excellent elongation properties from a stable, aqueous palladium electroplating bath comprising a palladium tetramine sulfate.

18. A process for producing palladium tetramine sulfate comprising mixing palladium, sulfuric acid and water, heating the mixture, then cooling the mixture to form a solid, mixing the solid with a base to form the palladium tetramine sulfate.

19. A process according to claim 18, wherein the base is ammonium hydroxide.

20. A process for producing palladium tetramine sulfate comprising mixing palladium, a nitrate salt, nitric acid and hydrochloric acid, heating the mixture, thereafter adding sulfuric acid, heating the mixture followed by cooling to form a solid, which solid is reacted with a base to form palladium tetramine sulfate.

European Patent

Office

**EUROPEAN SEARCH REPORT**

Application number

| | DOCUMENTS CONSIDERED TO BE RELEVANT | | EP 88301532.3 |
|---|---|---|---|

| Category | Citation of document with indication, where appropriate, of relevant passages | Relevant to claim | CLASSIFICATION OF THE APPLICATION (Int. Cl 4 ) |
|---|---|---|---|
| X | DE - A1 - 3 601 698 (OMI INTER-NATIONAL CORP.) <br> * Claims, especially 8,16, 19,20; examples 2,3; page 5, lines 10-12; page 7, especially last line * | 1,2,6, 10,12, 13,15, 17; | C 25 D 3/50 <br> C 25 D 3/52 <br> C 01 G 55/00 |
| A | | 18-20 | |
| | -- | | |
| X | GB - A - 2 133 041 (OMI INTER-NATIONAL CORPORATION) <br> * page 1, lines 69-95 * | 1,2,12 | |
| | -- | | |
| X | US - A - 4 622 110 (J.L.MARTIN et al.) <br> * Column 4, lines 32-47; claims * | 1-3,12, 15 | |
| | | | TECHNICAL FIELDS SEARCHED (Int. Cl 4 ) |
| | -- | | |
| X | US - A - 4 552 628 (J.WILCOX et al.) <br> * Examples 1,2; tables from examples 3,4; claims * | 1-4,12, 15 | C 25 D <br> C 01 G |
| | ---- | | |

The present search report has been drawn up for all claims

| Place of search | Date of completion of the search | Examiner |
|---|---|---|
| VIENNA | 11-05-1988 | SLAMA |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82